# EUROPEAN PATENT APPLICATION

(11) **EP 1 507 357 A1**
(43) Date of publication of application: **16.02.2005**
(21) Application number: 03017651.5
(22) Date of filing: 13.08.2003
(51) Int. Cl.: H04L 9/32

(54) **An access control and charging method for digital television applications**

(71) Applicant: Mind On Move Oy, 02150 Espoo (FI)
(72) Inventor: Heinonen, Jukka, 00530 Helsinki (FI); von Knorring, Niklas, 00170 Helsinki (FI); Teppo, Aki, 02100 Espoo (FI); Ropponen, Teemu, 00530 Helsinki (FI)
(74) Representative: Söderman, Päivi Karin Lisbeth

(57) **Abstract**

This invention relates to an access control and charging method for digital television applications. In the method a key issued by an authorizing instance, i.e., server (1) is broadcasted (3) to the digital television receiver environments, i.e., clients (2 and 2'). When a user requests access to an application, the client (2) generates a challenge which is then is presented to the server (1), not using the interaction channel integrated to the client (2), but instead using an alternative means of communication (4). The server (1) calculates a response to the challenge and returns it to the user using some alternative means of communication (3). The response is presented to the client (2) which checks that the response is an expected one, based on calculations using the broadcasted key, the challenge and the response, and then grants or denies access to the application accordingly. If the use of alternative means of communication (4) is chargeable, the method can be used for charging, also.

## Description

The invention relates to a method for access control and charging for digital television (also known as interactive television) applications. Using the method broadcasters can provide digital television applications for viewers and control access to it. In addition to implementing access control, the method can be used for charging for digital television application usage.

In the Internet community there is a plethora of access control and charging methods. Some state-of-the-art methods use Public Key Infrastructure (PKI) methods for access control. None of the Internet approaches apply to digital television directly well, because digital television receiver environments (client from hereafter) often lack a return channel (also known as interaction channel) that connects the client to the Internet (or another communication network).

Prior art applications use an integrated return channel for access control and/or charging for application usage. The disadvantage of this approach is that not all digital television users have such return channel available, and thus this approach limits the number of potential users. Also, charging may require a separate billing agreement with a third party, such as a bank or a credit card company.

Prior art applications also use a common password that is broadcasted to all clients and then the user is required to provide this password before access is granted. The setback with this approach is that if one user gains access to the application, he/she may provide the password to other users, thus possibly allowing the other users access without them being properly controlled and/or charged. Also, if the application stays resident in the client, the same password can be used for accessing the application over and over again. Thus, this approach cannot be used in scenarios where it is desired that access to the application is time-limited.

The purpose of this invention is to overcome the aforementioned disadvantages. The invention introduces a method where a key issued by an authorizing instance (authorization key from hereafter) is broadcasted to the clients. The client generates a challenge, which is then is presented to the authorizing instance, not using the return channel integrated to the client, but instead using an alternative means of communication. The authorizing instance calculates a response to the challenge and returns it to the user using some alternative means of communication. The response is presented to the client, which checks that the response is an expected one, based on calculations using the broadcasted authorization key, the challenge and the response.

The invented method overcomes the disadvantages accordingly:

The invented method is implemented as collaboration between a server hosted by the broadcaster or another authorization instance (server from hereafter) and a client.
The user wanting access to the access controlled application possesses the necessary equipment for alternative means of communication with the server and possibly initiates transmissions.

No integrated return channel is required, as an alternative means of communication is used. The alternative means of communication may, in some preferable embodiments, be a sequence of communications, potentially comprising of several communications media. The client gives instructions on how to contact the server, how the user is identified and how to transmit the challenge generated by the client to the server. Using the same channel or any other like media, a response to the challenge is returned to the client.

In some preferable embodiments, the alternative channel may not automatically complete the communications sequence, but the user may have to input the challenge to another communications means and/or input the response to the client manually.

In some preferable embodiments the communications channels and means in an alternative means of communication may be:
- a short message (SMS), a multimedia message (MMS), enhanced message (EMS), or other like means,
- instant messaging such as ICQ, AOL Instant Messenger, Microsoft Messenger or other like means,
- a phone call over POTS, mobile network or Internet or other like means,
- an access to Internet, intranet or extranet using WWW, FTP or other like means,
- Serial connection (RS-232), or other like means,
- Bluetooth, or other like means,
- WirelessLAN, or other like means,
- Firewire, or other like means,
- IrDA, or other like means,
- Ethernet, or other like means,
- Paging mechanisms, or other like means.

The alternative means of communication may also provide mechanisms needed for charging. Preferably the user of digital television user already has access to the communication channel and does not require a new billing agreement with some third party.

Any user who has gained access to the system cannot pass on the challenge response to other users, because the client independently generates challenge and does not accept a response to any other challenges. The challenge may, in some embodiments, be a random number or it may be some unique information related to the user's receiver environment, such as a receiver device's serial number or unique information related to the user, such as a user's e-mail address. In some embodiments, the challenge may, for usability reasons, be limited to a length that is easily typed manually and thus the same challenge may occur on other clients. However, enough variation can be obtained to practically prevent unauthorized use.

In some embodiments the access is granted only for a period of time. This is achieved by broadcasting a new authorization key when the access condition changes. For example, a new authorization key may be broadcasted periodically. When a client receives a new authorization key, it may require the user to renew access authorization immediately or it may require renewal of authorization when the user initializes the application the next time. In some preferable embodiments, if the authorization key changes rapidly, several authorization keys may be valid at a given time. In such embodiments, a key identifier is bundled with the challenge to associate the challenge, the response, and the authorization key. This will aid in verifying that the response-challenge pair is still valid.

In the following the invention is described in greater detail and two exemplary embodiments with references to accompanying drawings are presented. In the drawings,
Figure 1 presents a generic overall picture of the entities involved in the method.
Figure 2 presents a basic server method with hash authorization in accordance with the invention as a flow diagram,
Figure 3 presents a basic client method with hash authorization in accordance with the invention as a flow diagram,
Figure 4 presents a more secure server method with PKI authorization and periodic key generation in accordance with the invention as a flow diagram
Figure 5 presents a more secure client method with PKI authorization and periodic keys in accordance with the invention as a flow diagram.

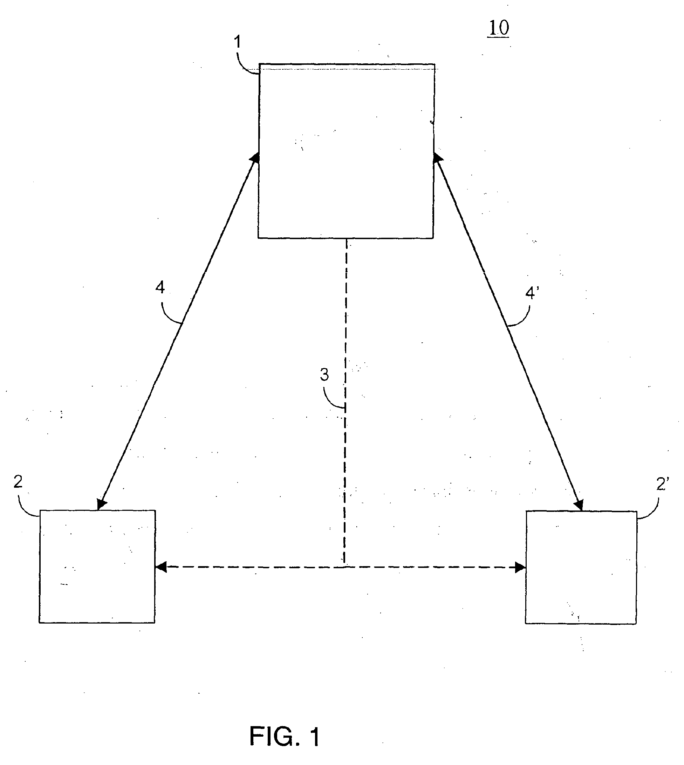

In the system architecture presented in Figure 1, Entity 1 represents the authorizing instance, i.e., the server. The server may in itself, consist of several sub-entities (not depicted). The server sends the application and the authorization key to clients (Entities 2 and 2') via the broadcast stream (Entity 3). It also receives challenges from clients via an alternative means of communications (Entities 4 and 4) and sends responses to these challenges, using same or different alternative means of communications.

In Figure 1, Entities 2 and 2' represent two clients in the system. The clients receive the application and authorization key via the broadcast stream (Entity 3). The clients send challenges to the server and receive responses to the challenge from the server using an alternative means of communications (Entities 4 and 4').

In Figure 1, Entity 3 represents the one-way broadcast stream, which is used to deliver the application and the authorization key(s) to the user and/or client

In Figure 1, Entity 4 and 4' represent alternative means of communication, which are used to communicate the challenge from the client (Entities 2 and 2') to the server (Entity 1), and the response to the challenge from the server back to the client.

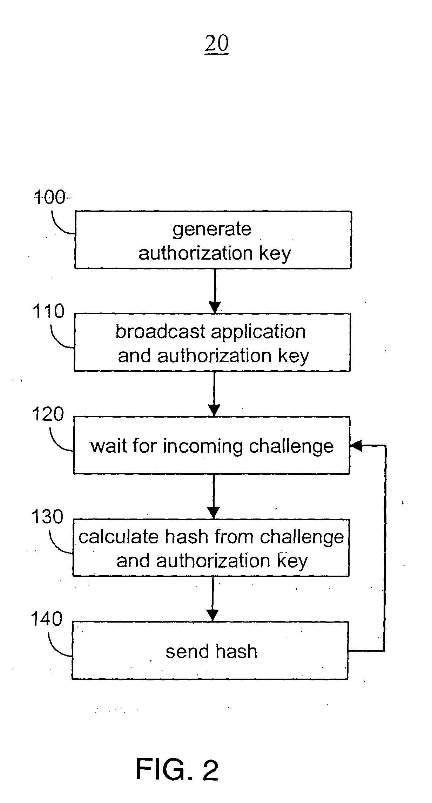

In Phase 100 of Figure 2 the server generates an authorization key. The key is preferably a random number but other kind of keys may be used also. Server stores the generated key for further use.

In Phase 110 of Figure 2 the server broadcasts an application and the authorization key generated in Phase 100. Preferably the key is different for each distinct application but the same key may be used for all applications in some cases. The authorization key is same for all clients and is used in the calculations of the verification of the response to the challenge.

In Phase 120 of Figure 2 the server waits for incoming challenges. The challenge may arrive to the authorization system via any alternative means of communication defined earlier in this document.

In Phase 130 of Figure 2 the server has received a challenge and user identifier, a sort of an address to which the response to the challenge is sent. A challenge is a piece of information generated by a client. The client expects a response corresponding to this piece of information. If the user is authorized to use a service, the server concatenates or otherwise bundles the challenge with the authorization key and from the bundled message calculates a hash value (also known as message digest). Hashing is transformation of information to a shorter, fixed length value that represents the original information. It is difficult to regenerate the original information from a hashed value or to generate same hash with a different source.

Using such an algorithm makes it more difficult for a potential malicious user to determine the authorization key from a response generated by a server and intercepted by the malicious user. A hash function is typically MD2, MD4, MD5, SHA, SHA-1, Message Authentication Algorithm, HAVAL, Davies-Meyer, Abreast Davies Meyer, GOST Hash, N-HASH, RIPE-MD, SNEFRU or any like algorithm.

In Phase 140 of Figure 2 the server sends the hash value that is the response, generated in Phase 130 back to the client instance requesting access. The hash value is sent to the user; who is identified using the user identifier received in Phase 130. The response may be transmitted via the same alternative communications channel as it arrived or some other channel may be used. After this, the server re-enters Phase 120, and continues execution as defined previously.

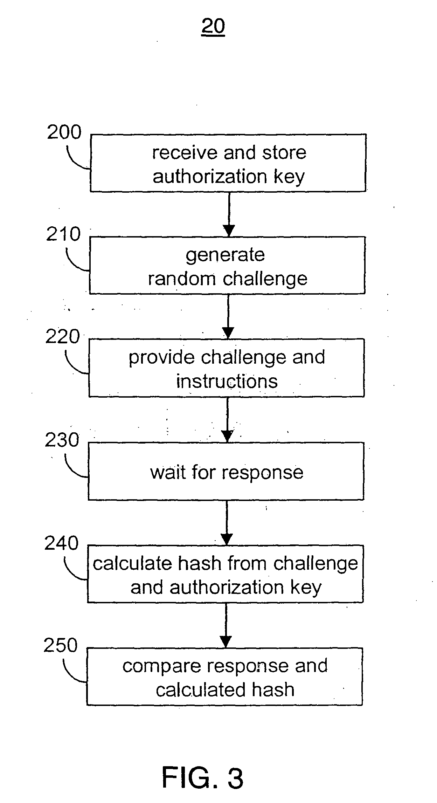

In Phase 200 of Figure 3 the client is launched and it stores the last received authorization key for later use.

In Phase 210 of Figure 3 the client generates a challenge. The challenge can be a random number, something related to the user's receiver environment, such as a receiver device's serial number or unique information related to the user, such as a user's e-mail address. The challenge can be of fixed length or of variable length.

In Phase 220 of Figure 3 the client provides the challenge for the user to be transmitted to the server. In some embodiments the challenge is presented on television screen where from the user types it to be transmitted via an alternative means of communication or the challenge may be transmitted to the communication equipment with any means provided by the set-top box. Such means can be a wired or wireless means, including Bluetooth, IrDA, RS-232, Firewire or any other like wired or wireless means, as previously defined. Preferably the user is instructed on how to obtain access and the response is prompted.

In Phase 230 of Figure 3 the client waits for the response.

In Phase 240 of Figure 3 the client has received the response. The response is delivered to the user via alternative means of communication and finally to the set-top box by typing, Bluetooth, IrDA, RS-232, Firewire, or any other like wired or wireless means, as previously defined. The client concatenates or otherwise bundles the authorization key received in Phase 200 and the challenge generated in Phase 210, in the same fashion as the server did in Phase 130. From this concatenated message a hash value is calculated using the same algorithm as used by the server in Phase 130.

In Phase 250 of Figure 3 the client compares the hash value calculated in Phase 240 to the response received from the server. If the response received is correct, the client grants access to the application. Otherwise, access is denied.

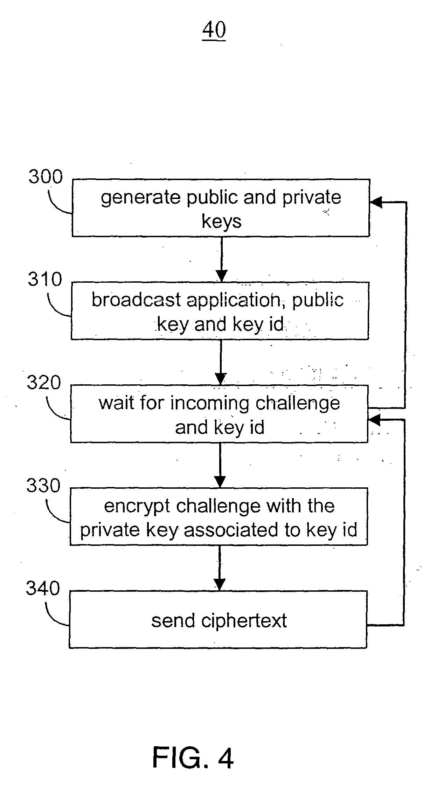

In Phase 300 of Figure 4 the server generates a key pair one key called public key and one called private key. The key pair is suitable for asymmetric cryptography and PKI systems, such as Knapsack, RSA, Pohlig-Hellman; Rabin, ElGamal, McEliece, elliptic curve algorithms, LUC, finite automaton public-key algorithms or any other like algorithms. The server generates a key identifier unique to the generated key pair and stores it with the key pair for later use. The public key is used as the authorization key while the private key is not disclosed.

In Phase 310 of Figure 4 the server broadcasts an application, the authorization key generated in Phase 100 and the associated key identifier. Preferably the authorization key is different for each distinct application, but the same key may, in some cases, be used for all applications. The authorization key is same for all clients and is used in the calculations of the verification of the response to the challenge.

In Phase 320 of Figure 4 the server waits for incoming challenges. The challenge may arrive to the authorization system via any alternative means of communication defined earlier in this document. The challenge is bundled with the key identifier. After a period of time specified by the server administrator, the server generates a new key pair. In such case the flow of events transits back to Phase 300.

In Phase 330 of Figure 4 the server has received a challenge, user identifier and a key identifier. A challenge is a piece of information generated by a client. The client expects a response corresponding to this piece of information. If the user is authenticated to use a service, the server encrypts the challenge with the private key associated to the key identifier. The encryption algorithm is one used for key generation in the Phase 300. An alternative approach to grant ascess is to use a digital signature algorithm in providing response to a challenge.

In Phase 340 of Figure 4 the server sends the ciphertext generated in Phase 330 back to the instance requesting access. The response may be transmitted via the same channel as it arrived or some other channel may be used. Finally, the flow of events transits back to Phase 320.

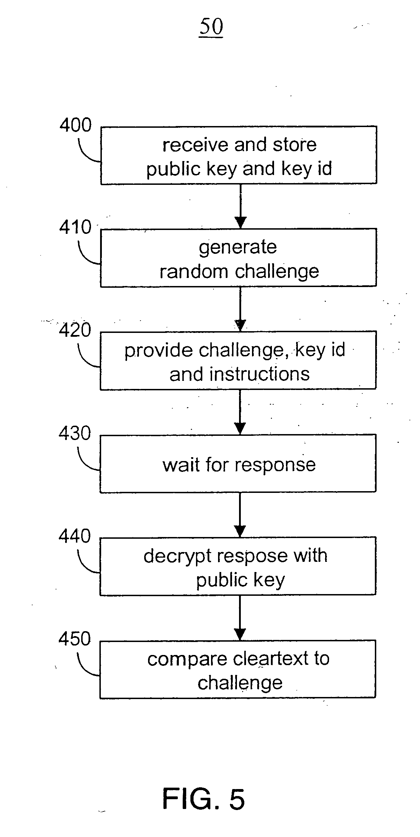

In Phase 400 of Figure 5 the client is launched and it stores the last received authorization key and the associated key identifier for later use.

Phases 410, 420 and 430 in Figure 5 are similar to those presented in Phases 210,. 220 and 230 with the exception that in Phase 420 also the key identifier is provided to the user to be transmitted to the server. The key identifier may be delivered separately or it may be bundled into the challenge.

Phase 440 in Figure 5 the client has received the response. The response is delivered to the user via alternative means of communication and finally to the set-top box by typing, Bluetooth, IrDA, RS-232, Firewire, or any other like wired or wireless means. The received response is decrypted using the public key associated to the key identifier used in Phase 420.

In Phase 450 of Figure 5 the client compares the decrypted response to the original challenge. If they are equal, access to the application is granted. If digital signatures or any other similar algorithm was used in the server in Phase 330, the corresponding calculations are performed to assure that the response originates from the authorizing instance.

The invention has been explained above with reference to the aforementioned embodiments. However, it is clear that the invention is not only restricted to these embodiments but comprises all possible embodiments within the spirit and scope of the inventive thought and the following patent claims.

## Claims

1. Method for the access control of digital television applications in a network comprising a server and receivers and users for them, and between which server and receiver there is a one-way broadcast stream for the communication between the server and the receiver, whereas the communication between the server and the user takes place via an alternative means, **characterized by** the following steps, wherein
a) the server sends an authorization key and an application to the receiver via the broadcast stream,
b) the receiver generates a challenge and presents it to the user,
c) the user sends the challenge to the server via the alternative means,
d) the server treats the challenge with said key or the like and sends the challenge treated with the key to the user as a response to the challenge via the alternative means,
e) the receiver checks the response obtained from the user and grants access to the application if the response is correct.

2. Method of claim 1, **characterized in that** that the message(s) sent via the alternative means is/are sent by means of the following communication channels and/or means: short message (SMS), multimedia message (MMS), enhanced message (EMS), instant message, such as ICQ, AOL Instant messenger, Microsoft messenger or the like, a phone call over POTS, a mobile network or Internet, RS-232, Bluetooth, Wireless LAN, Firewire, IrDA, Ethernet or paging.

3. Method of claim 1 or 2, **characterized in that** the challenge is a random number and/or information related to the user's receiver environment, such as the e-mail address of the user.

4. Method of any of claims 1 - 3, **characterized in that** a different key is sent for each application.

5. Method of any of claims 1 - 4, **characterized in that** the authorization key is a random number.

6. Method of any of claims 1 - 5, **characterized in that** in step d), the receiver treats the challenge with said key or the like by bundling the challenge with the key and by calculating a hash value from the concatenated message.

7. Method of claim 6, **characterized in that** in step e), the receiver checks the response obtained from the user, treats the response with said key or its derivative by bundling the challenge with the key and by calculating a hash value from this in the same way and by using the same algorithm as the server in claim 6 and compares the hash with the response obtained from the user.

8. Method of claims 6 and 7, **characterized in that** the response is correct and access to the application is granted if the hash of the response and the hash of the receiver correspond to each other.

9. Method of any of claims 1-4, **characterized in that** the authorization key is a public key used in the PKI-system, whereby the server furthermore sends a key identifier to the receiver in step a), which identifier is bundled into the challenge in step b).

10. Method of claim 9, **characterized in that** in step c), the server treats the challenge with said key by encrypting the challenge with a private key corresponding to said public key and the key identifier and sends the encrypted challenge as a response in step d).

11. Method of claims 9 and 10, **characterized in that** in step e), the receiver checks the response obtained from the user by decrypting the encryption of the challenge with a public key corresponding to said private key.

12. Method of claims 9-11,**characterized in that** the response is correct and access to the application is granted if the decrypted plain text response corresponds to the challenge.
